# EUROPÄISCHE PATENTSCHRIFT

(11) **EP 1 753 645 B1**
(45) Veröffentlichungstag und Bekanntmachung des Hinweises auf die Patenterteilung: **10.06.2009**
(21) Anmeldenummer: 04802739.5
(22) Anmeldetag: 17.11.2004
(51) Int. Cl.: B60S 1/38, C08K 3/04, C08L 21/00

(54) **GUMMIMATERIAL UND VERFAHREN ZUR HERSTELLUNG DESSELBEN**
RUBBER MATERIAL AND METHOD FOR PRODUCTION THEREOF
MATERIAU EN CAOUTCHOUC ET PROCEDE DE FABRICATION DUDIT MATERIAU

(30) Priorität: 05.12.2003 DE 10356934
(43) Veröffentlichungstag der Anmeldung: 21.02.2007
(73) Patentinhaber: ROBERT BOSCH GMBH, 70442 Stuttgart (DE)
(72) Erfinder: GEILENKIRCHEN, Robert, B-4624 Fleron (BE)
(86) Internationale Anmeldenummer: PCT/DE2004/002525
(87) Internationale Veröffentlichungsnummer: WO 2005/056356

(56) Entgegenhaltungen:
- US-A- 2 999 831
- US-A- 4 075 373
- US-A- 4 374 218
- US-A- 4 716 618
- US-A- 5 456 750
- US-A1- 2002 099 142
- PATENT ABSTRACTS OF JAPAN Bd. 013, Nr. 061 (C-567), 10. Februar 1989 (1989-02-10) & JP 63 251442 A (TOYODA GOSEI CO LTD), 18. Oktober 1988 (1988-10-18)
- PATENT ABSTRACTS OF JAPAN Bd. 1997, Nr. 07, 31. Juli 1997 (1997-07-31) & JP 09 071699 A (NISHIKAWA RUBBER CO LTD), 18. März 1997 (1997-03-18)

## Beschreibung

Die Erfindung betrifft ein Gummimaterial insbesondere für Wischblätter von Scheibenwischern oder für Kraftfahrzeugreifen, sowie dessen Verwendung nach dem Oberbegriff der unabhängigen Ansprüche.

### Stand der Technik

Bei Scheibenwischblättern ist es wichtig, dass sie sich der Kontur der Scheibe eines Kraftfahrzeugs möglichst gut anpassen können und auch bei unterschiedlichen Temperaturen flexibel bleiben. Daher werden Wischblätter in der Regel aus Elastomerprofilen gefertigt, wobei im Wesentlichen Gummimaterialien wie Naturkautschuk oder synthetische Kautschuksorten wie Chloroprenkautschuk oder EPDM verwendet werden. Daneben sind auch Wischblätter aus Silikonkautschuk oder Polyurethankautschuk bekannt.

Ein derartiges Wischblatt ist beispielsweise in der DE 19615 421 A1 beschrieben. Dieses Wischblatt umfasst ein Basisteil, das die Halterung des Wischblatt in einem Metallbügel ermöglicht, sowie eine Wischlippe, die über einen Steg mit dem Basisteil verbunden ist und das an seinem einer zu wischenden Glasfläche zugewandten Ende einen Lippenbereich aufweist. Das Basisteil und der Steg sind aus einer Gummimatrix geformt, welche zumindest überwiegend aus Polychloropren besteht, während hingegen die Wischlippe eine abweichende Materialzusammensetzung aufweist. Weiterhin enthält das Wischblatt Zinkoxid und Ruß als Füllstoffe, die die mechanischen Eigenschaften des Wischblatts und dessen Verarbeitbarkeit beeinflussen. Das Wischblatt wird vorzugsweise durch ein Coextrusionsverfahren hergestellt.

Weiterhin sind aus der US 2002/0099142 A1, der US 4,374,218, der US 4,075,373, der US 2 999 831, der JP 63 25 14 42 und der JP 09 0716 99 Gummimaterialien bekannt, die neben dem eigentlichen Gummimaterial zusätzlich eine Mischung zweier verschiedener Rußsorten als Füllstoffe umfassen. Auch aus der US 5 456 750 A ist die Mischung zweier Rußsorten zur Verwendung in polymeren Materialien bekannt. Darüber hinaus ist aus der US 4,716,618 ein Wischblatt bekannt, dessen einzelne Komponenten aus unterschiedlichen Gummimaterialien aufgebaut sind.

Aufgabe der vorliegenden Erfindung ist es, ein Gummimaterial und ein Verfahren zu dessen Herstellung bereitzustellen, das die Erzeugung formstabiler und mechanisch belastbarer Profile ermöglicht.

### Vorteile der Erfindung

Das erfindungsgemäße Gummimaterial gemäß den kennzeichnenden Merkmalen des Anspruchs 1 hat gegenüber dem Stand der Technik den Vorteil, dass ein für die Fertigung von Wischblättern bzw. Fahrzeugreifen geeignetes Gummimaterial mit einem günstigen Eigenschaftsprofil verfügbar ist, das gut reproduzierbar und somit kostengünstig hergestellt werden kann. Dies wird erreicht, indem das Gummimaterial als Füllstoff eine Mischung mindestens zweier Rußsorten enthält, da die Mischung zweier Rußsorten einen höheren Füllgrad des Gummimaterials gestattet als die alleinige Verwendung einer einzigen Rußsorte, ohne dass sich die mechanischen Eigenschaften des Gummimaterials im Endzustand beispielsweise hinsichtlich seiner Härte verschlechtern.

Vorzugsweise werden die Mengenanteile der beiden Rußsorten so gewählt, dass ein für die Verarbeitung des Gummimaterials günstiger möglichst hoher Füllgrad erreicht wird, andererseits die Gesamthärte des ausgehärteten Gummimaterials nicht zu hoch wird, da das System sonst spröde und beispielsweise nicht mehr wischfähig ist.

Vorteilhafte Weiterbildungen der Erfindung ergeben sich aus den in den Unteransprüchen genannten Maßnahmen.

So ist vorteilhaft, wenn das Gummimaterial als Füllstoff insbesondere eine Mischung von Ofen- und Thermalruß enthält, da sich diese hinsichtlich ihrer Körnung und der für das Gummimaterial resultierenden mechanischen Eigenschaften stark unterscheiden und somit über das Mischungsverhältnis der beiden Rußsorten eine optimale Einstellung der mechanischen Eigenschaften des Gummimaterials gestatten.

Vorteilhaft ist weiter, wenn mindestens eine der im Gummimaterial enthaltenen Gummisorten zwei Fraktionen enthält, die sich hinsichtlich ihrer Viskosität im unvulkanisierten Zustand unterscheiden. Die Mengenverhältnisse der beiden Fraktionen werden dabei so gewählt, dass eine für die Verarbeitung des Gummimaterials günstige Gesamtviskosität des Rohgummimaterials eingestellt wird. Die Gesamtviskosität des Rohgummimaterials hat einen wesentlichen Einfluss beispielsweise auf das Quellverhalten des Materials bei der Extrusion und ist somit eine Voraussetzung für eine ausreichende Formstabilität der erzeugten Gummiprofile.

Weiterhin ist von Vorteil, wenn das Gummimaterial ein Homogenisierungsmittel beispielsweise in Form eines organischen Harzes enthält, sodass das Gummimaterial eine stabile Dispersion der beiden Gummifraktionen sowie der weiteren im Gummimaterial enthaltenen Substanzen bildet.

In einer besonders bevorzugten Ausführungsform enthält das Gummimaterial kein Kalziumoxid oder -hydroxid. Kalziumoxid wird üblicherweise Gummimaterialien während der Verarbeitung insbesondere als Trockenmittel zugesetzt, es verschlechtert jedoch die mechanischen Eigenschaften des resultierenden Gummimaterials.

### Zeichnung

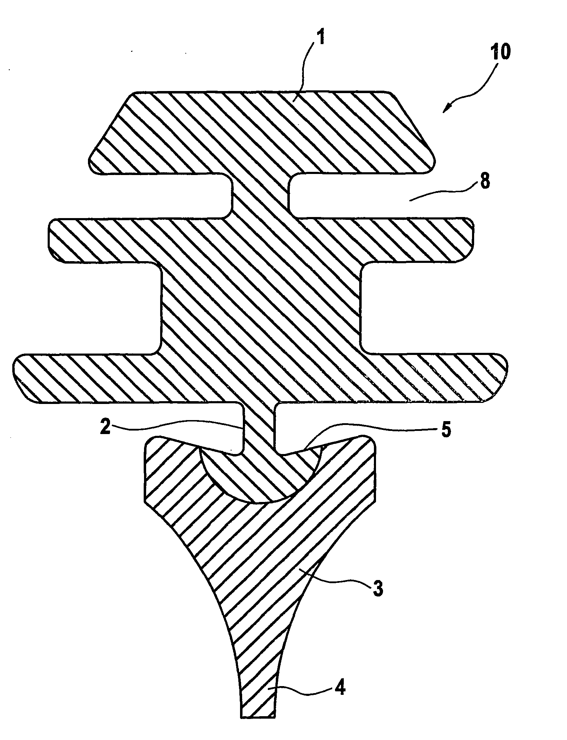

Ein Ausführungsbeispiel der Erfindung ist in der Zeichnung dargestellt und in der nachfolgenden Beschreibung näher erläutert. Es zeigt Figur 1 einen Querschnitt durch ein erfindungsgemäßes Wischblatt mit einer außenliegenden Federschiene.

### Ausführungsbeispiel

In Figur 1 ist ein Wischblatt 10 gemäß einem ersten Ausführungsbeispiel der vorliegenden Erfindung dargestellt. Das Wischblatt weist eine im wesentlichen streifenförmige Ausgestaltung auf. Es umfasst ein verbreitertes Kopfteil 1, das über einen Umlegesteg 2 mit einem Keil 3 verbunden ist. Das Kopfteil 1 weist Aussparungen 8 für die Aufnahme einer nicht dargestellten außenliegenden Federschiene auf. Der Keil 3 verjüngt sich an seiner dem Kopfteil 1 gegenüberliegenden und der zu reinigenden Glasfläche zugewandten Seite zu einer Wischlippe 4.

Das Kopfteil 1 bzw. der Umlegesteg 2 ist vorzugsweise aus EPDM (Ethylen-Propylen-Dien-Terpolymer), EPR (Ethylen-Propylen-Copolymer), CR (Chloropren), NR (Naturkautschuk), BR (Polybutadien), SBR (Styrol-Butadien-Gummi) oder IR (Polyisopren) bzw. Mischungen derselben gefertigt. Der Keil 3 ist vorzugsweise ebenfalls aus den genannten Materialien ausgeführt, er weicht jedoch hinsichtlich seiner Materialzusammensetzung von derjenigen des Kopfteils 1 ab. Zur besseren Verankerung des Umlegestegs 2 im Keil 3 ist ein dem Umlegesteg 2 benachbarter Bereich 5 des Keils 3 aus dem Material des Umlegestegs 2 gefertigt.

Das Gummimaterial enthält von mindestens einer der genannten Gummisorten EPDM, SBR, EPR, CR, BR, NR oder IR zwei Fraktionen, die zwar der gleichen Gummisorte zuzuordnen sind, sich jedoch in ihrer Viskosität im unvulkanisierten Zustand unterscheiden. So kann das Gummimaterial beispielsweise eine Fraktion EPDM 1 mit einer ersten Mooney-Viskosität (bei 125°C) von beispielsweise 20 bis 95 Mooney, vorzugsweise von 20 bis 50 Mooney enthalten und eine Fraktion EPDM 2 mit einer zweiten Mooney-Viskosität von beispielsweise 20 bis 95 Mooney, vorzugsweise von 50 bis 95 Mooney. Die Mengenverhältnisse der beiden Fraktionen EPDM 1 und EPDM 2 werden so gewählt, dass die Gesamtviskosität des Rohgummimaterials in einem Bereich von vorzugsweise 30 bis 60 Mooney angesiedelt ist und somit eine optimale Verarbeitung des Rohgummimaterials gewährleistet ist.

Die unterschiedlichen Viskositäten der Fraktionen EPDM 1 und EPDM 2 können beispielsweise durch entsprechende, in den Fraktionen enthaltene Zusatzstoffe bedingt sein oder aber durch eine entsprechende Wahl der Mengenverhältnisse der dem Terpolymer EPDM zu Grunde liegenden Monomere Ethylen, Propylen bzw. des Diens. Eine weitere Möglichkeit zur Steuerung der Viskosität besteht in der Variation des dem EPDM zu Grunde liegenden Diens.

Weiterhin führt eine Erhöhung des Ethylenanteils im EPDM zu einer Verbesserung von dessen Extrudierbarkeit, wohingegen eine Erhöhung des Propylenanteils die Elastizität des resultierenden EPDMs verbessert. Gleiches gilt auch für die Eigenschaften von EPR in Abhängigkeit von dessen Ethylen- bzw. Propylenanteil.

Das Gummimaterial kann mehrere Gummisorten umfassen. Dabei können von einer Gummisorten zwei oder mehr als zwei Fraktionen enthalten sein, es ist jedoch auch möglich, von mindestens zwei der im Gummimaterial enthaltenen Gummisorten zwei oder mehr Fraktionen vorzusehen. Hierbei wird unter einer Fraktion stets eine der zu Grunde liegenden Gummisorte strukturverwandte oder-identische Substanzportion verstanden.

In einer bevorzugten Ausführungsform ist das Kopfteil 1 aus EPDM, CR oder aus einer Mischung derselben ausgeführt, während der Keil 3 bzw. die Wischlippe 4 aus BR gefertigt sind. Vorzugsweise wird der Keil 3 bzw. die Wischlippe 4 aus einer Mischung von mindestens zwei verschiedenen BR-Fraktionen ausgebildet, die sich beispielsweise hinsichtlich ihrer Seitenketten bzw. ihrer cis-/trans-Abfolge unterscheiden.

Das Gummimaterial enthält weiterhin ein Homogenisierungsmittel, das eine bessere Durchmischbarkeit der verschiedenen Gummisorten bzw. -fraktionen im Rohgummimaterial gewährleistet. Gleichzeitig führt es zu einer Stabilisierung des gesamten Rohgummimaterials als Dispersion von Füll- und Hilfsstoffen in der Rohgummimasse. Als Homogenisierungsmittel werden beispielsweise aromatische oder aliphatische Harze eingesetzt.

Das Gummimaterial enthält weiterhin mindestens einem Füllstoff. Der Füllstoff ist vorzugsweise aus Ruß gebildet. Als Ruß wird beispielsweise sogenannter Ofenruß eingesetzt. Es hat sich jedoch als vorteilhaft erwiesen, als Füllstoff eine Mischung von Ofenruß und Thermalruß einzusetzen. Während Ofenruß im allgemeinen eine relativ feine Körnung aufweist und bei hohen Füllgraden zu einem zwar abriebfesten, jedoch relativ harten Gummimaterial führt, weist Thermalruß eine grobe Körnung auf, die auch bei hohen Füllgraden nur zu einer geringen Zunahme der Härte des Gummimaterials führt.

Vorzugsweise werden die Mengenanteile der beiden Rußsorten so gewählt, dass ein für die Verarbeitung des Gummimaterials günstiger möglichst hoher Füllgrad erreicht wird, andererseits die Gesamthärte des ausgehärteten Gummimaterials nicht zu hoch wird, da das System sonst spröde und beispielsweise nicht mehr wischfähig ist.

Ein besonders hoher Füllgrad kann erreicht werden, wenn dem Gummimaterial zusätzlich ein Weichmacher zugesetzt wird, da so der mit steigenden Füllstoffgehalten zunehmenden Versprödung des Gummimaterials wirkungsvoll entgegengewirkt werden kann. Als Weichmacher eignen sich beispielsweise synthetische Weichmacher sowie Mineralöl.

Üblicherweise werden bei der Herstellung von Gummimaterialien dem Rohgummimaterial Trocknungsmittel zugesetzt. Bei Verzicht auf derartige Trocknungsmittel führt die in den Ausgangsstoffen enthaltene Feuchtigkeit während der Extrusion oder Vulkanisation zu einer porösen Oberfläche des auf diese Weise erzeugten Gummiprofils. Ein gängiges Trocknungsmittel, dass bei Gummimaterialien zur Anwendung kommt, ist beispielsweise Kalziumoxid. Dieses bildet bei Kontakt mit der im Gummimaterial enthaltenen Feuchtigkeit Kalziumhydroxid. Bei Verwendung von Kalziumoxid können jedoch Probleme entstehen, wenn es zu einer Kristallbildung des resultierenden Kalziumhydroxids kommt.

Aus diesem Grund erfolgt die Herstellung des vorliegenden Gummimaterials vorzugsweise ohne einen Zusatz von Kalziumoxid. Um dennoch eine ausreichend gute Oberflächengüte eines erzeugten Profils zu erreichen, wird zum einen der Feuchtigkeitsgehalt der zur Erzeugung des Gummimaterials benötigten Ausgangsmaterialien überprüft und diese gegebenenfalls separat unter Feuchtigkeit Ausschuss gelagert. Weiterhin wird die Vulkanisation des Rohgummimaterials mit einer möglichst kurzen Reaktionszeit durchgeführt. Hierfür eignet sich insbesondere ein auf Peroxiden beruhendes Vulkanisationssystem.

Exemplarisch ist im folgenden ein Ausführungsbeispiel eines Gummimaterials bzw. dessen Zusammensetzung bezogen jeweils auf 100 Gewichtsteile an Elastomer (phr) aufgeführt.

| Substanz | Gehalt in phr Rezeptur 1 | Gehalt in phr Rezeptur 2 |
|---|---|---|
| EPDM 1 | 0.5-100 | - |
| EPDM 2 | 0.5-100 | - |
| EPR 1 | - | 0.5-100 |
| EPR 2 | - | 0.5-100 |
| NR, IR, BR, SBR oder CR | 0-10 | 0-70 |
| Homogenisierungsmittel | 0-10 | 0-10 |
| Ofenruß | 20-120 | 20-120 |
| Thermalruß | 20-120 | 20-120 |
| Peroxid | 0-10 | 0.5-10 |
| Schwefel | 0 - 1 | - |
| Hilfsstoffe + Weichmacher | 20-105 | 20-105 |

Die Herstellung des Gummimaterials erfolgt, indem zunächst eine oder mehrere Gummisorten bzw. eine oder mehrere Fraktionen der betreffenden Gummisorten mit dem oder den Füllstoff, dem Homogenisierungsmittel und weiteren Verarbeitungshilfsstoffen einem Extruder zugeführt werden und dort eine intensive Vermischung erfahren. Alternativ können die Ausgangsmaterialien auch eine Mischung zugeführt, dort vermischt und beispielsweise formgepresst oder einem Spritzgussverfahren zugeführt werden.

Auf diese Weise wird ein Profilstrang erzeugt, wobei dieser bei der Erzeugung von Wischgummis für Scheibenwischer die Form eines Doppelstranges hat, bei dem zwei Wischgummi-Einzelstränge im Bereich der Wischlippe in Längsrichtung des Doppelstranges miteinander verbunden sind. Der erzeugte Doppelstrang wird zur Vulkanisation beispielsweise einem Salzbad oder einem Ofen zugeführt und dort bei einer Temperatur von ca. 220°C vulkanisiert. In einem weiteren Schritt erfolgt bei Bedarf eine Oberflächenmodifizierung beispielsweise durch Grafitieren, Halogenieren, Lackieren oder Beschichten. Danach wird das vulkanisierte Elastomerprofil abschließend in Längs- bzw. Querrichtung geschnitten.

Alternativ ist es möglich, gezielt nur bestimmte Oberflächenpartien eines Wischblattes zu modifizieren. So kann durch geeignete Prozessführung bei gezieltem Abdecken nicht zu modifizierender Bereiche des Wischblatts beispielsweise lediglich die in Kontakt mit der zu reinigenden Oberfläche stehende Wischlippe modifiziert werden oder zusätzlich bzw. alternativ eine Führungsnut des Wischblattes, mit denen das Wischblatt in eine entsprechende Wischblatthalterung eingeführt werden kann.

## Patentansprüche

1. Gummimaterial, insbesondere für Wischblätter von Scheibenwischern oder für Kraftfahrzeugreifen, das zumindest eine Gummisorte, mindestens einen Füllstoff sowie Verarbeitungshilfsstoffe enthält, wobei der Füllstoff eine Mischung mindestens zweier verschiedener Rußsorten umfasst, und wobei mindestens eine der Gummisorten eine erste und eine zweite Fraktion aufweist, die sich im unvulkanisierten Zustand hinsichtlich ihrer Viskosität unterscheiden, **dadurch gekennzeichnet, dass** die Gesamtviskosität des Rohgummimaterials in einem Bereich von 30 bis 60 Mooney angesiedelt ist.

2. Gummimaterial nach Anspruch 1, **dadurch gekennzeichnet, dass** der Füllstoff eine Mischung aus Ofenruß und Thermalruß umfasst.

3. Gummimaterial nach einem der vorhergehenden Ansprüche, **dadurch gekennzeichnet, dass** das Gummimaterial 40 - 320 Gewichtsteile des Füllstoffs bezogen auf 100 Gewichtsteile an Elastomer enthält.

4. Gummimaterial nach einem der vorhergehenden Ansprüche, **dadurch gekennzeichnet, dass** ein Weichmacher und/oder Mineralöl enthalten ist.

5. Gummimaterial nach einem der vorhergehenden Ansprüche, **dadurch gekennzeichnet, dass** die Gummisorte EPDM, EPR, BR, SBR, IR oder CR ist.

6. Gummimaterial nach einem der vorhergehenden Ansprüche, **dadurch gekennzeichnet, dass** das Gummimaterial im Wesentlichen frei von Kalziumoxid ist.

7. Gummimaterial nach einem der vorhergehenden Ansprüche, **dadurch gekennzeichnet, dass** das Gummimaterial im Wesentlichen frei von Zinkoxid ist.

8. Wischblatt für Scheibenwischer, **gekennzeichnet durch** ein Gummimaterial gemäß einem der Ansprüche 1 bis 7.

9. Wischblatt gemäß Anspruch 8, **dadurch gekennzeichnet, dass** ein Kopfteil (1) und/oder ein Steg (2) des Wischblatts aus EPDM und/oder CR ausgeführt ist, und dass eine Wischlippe (4) des Wischblatts aus BR ausgeführt ist.

## Claims

1. Rubber material, in particular for wiper blades of windscreen wipers or for motor vehicle tyres, which contains at least one type of rubber, at least one filler and processing aids, the filler comprising a mixture of at least two different types of carbon black, and at least one of the types of rubber having a first fraction and a second fraction, which in the unvulcanized state differ with respect to their viscosity, **characterized in that** the overall viscosity of the unvulcanized rubber material is in a range of 30 to 60 Mooney.

2. Rubber material according to Claim 1, **characterized in that** the filler comprises a mixture of furnace carbon black and thermal carbon black.

3. Rubber material according to one of the preceding claims, **characterized in that** the rubber material contains 40-320 parts by weight of the filler with respect to 100 parts by weight of elastomer.

4. Rubber material according to one of the preceding claims, **characterized in that** a plasticizer and/or mineral oil is contained.

5. Rubber material according to one of the preceding claims, **characterized in that** the type of rubber is EPDM, EPR, BR, SBR, IR or CR.

6. Rubber material according to one of the preceding claims, **characterized in that** the rubber material is essentially free from calcium oxide.

7. Rubber material according to one of the preceding claims, **characterized in that** the rubber material is substantially free from zinc oxide.

8. Wiper blade for windscreen wipers, **characterized by** a rubber material according to one of Claims 1 to 7.

9. Wiper blade according to Claim 8, **characterized in that** a head part (1) and/or a web (2) of the wiper blade is made of EPDM and/or CR, and **in that** a wiper lip (4) of the wiper blade is made of BR.

## Revendications

1. Matériau en caoutchouc, notamment pour balais d'essuie-glace ou pour pneumatiques de véhicules automobiles, contenant au moins un type de caoutchouc, au moins une charge et des auxiliaires de traitement, la charge comprenant un mélange d'au moins deux types de suie différents, et au moins l'un des types de suie présentant une première et une deuxième fraction qui se distinguent, dans l'état vulcanisé, par leur viscosité, **caractérisé en ce que** la viscosité totale du matériau en caoutchouc brut est établie dans une plage de 30 à 60 Mooney.

2. Matériau en caoutchouc selon la revendication 1, **caractérisé en ce que** la charge comprend un mélange de suie de four et de suie thermique.

3. Matériau en caoutchouc selon l'une quelconque des revendications précédentes, **caractérisé en ce que** le matériau en caoutchouc contient de 40 à 320 parties en poids de la charge par rapport à 100 parties en poids d'élastomère.

4. Matériau en caoutchouc selon l'une quelconque des revendications précédentes, **caractérisé en ce qu'**il contient un plastifiant et/ou une huile minérale.

5. Matériau en caoutchouc selon l'une quelconque des revendications précédentes, **caractérisé en ce que** le type de caoutchouc est l'EPDM, l'EPR, le BR, le SBR, l'IR ou le CR.

6. Matériau en caoutchouc selon l'une quelconque des revendications précédentes, **caractérisé en ce que** le matériau en caoutchouc est essentiellement exempt d'oxyde de calcium.

7. Matériau en caoutchouc selon l'une quelconque des revendications précédentes, **caractérisé en ce que** le matériau en caoutchouc est essentiellement exempt d'oxyde de zinc.

8. Balai d'essuie-glace, **caractérisé par** un matériau en caoutchouc selon l'une quelconque des revendications 1 à 7.

9. Balai d'essuie-glace selon la revendication 8, **caractérisé en ce qu'**une partie de tête (1) et/ou une nervure (2) du balai d'essuie-glace est réalisée en EPDM et/ou en CR, et **en ce qu'**une lèvre d'essuie-glace (4) du balai d'essuie-glace est réalisée en BR.
